# EUROPEAN PATENT SPECIFICATION

(11) **EP 4 718 780 B1**
(45) Date of publication and mention of the grant of the patent: **30.09.2026**
(21) Application number: 25204873.1
(22) Date of filing: 26.09.2025
(51) Int. Cl.: H04L 9/40

(54) **DYNAMIC KNOWLEDGE-BASED AUTHENTICATION FOR SHARING DIGITAL ITEMS**
DYNAMISCHE WISSENSBASIERTE AUTHENTIFIZIERUNG ZUR GEMEINSAMEN NUTZUNG DIGITALER ELEMENTE
AUTHENTIFICATION DYNAMIQUE BASÉE SUR DES CONNAISSANCES POUR PARTAGER DES ÉLÉMENTS NUMÉRIQUES

(30) Priority: 30.09.2024 US 202463700906 P
(43) Date of publication of application: 01.04.2026
(73) Proprietor: Kapsula Z.K. Ltd, 9646607 Jerusalem (IL)
(72) Inventor: KATZ, Ari, 7181130 Modiin Illit (IL)
(74) Representative: Boult Wade Tennant LLP

(56) References cited:
- US-A1- 2005 013 291
- US-A1- 2015 373 021
- US-A1- 2016 072 782
- US-A1- 2020 043 067
- US-B1- 10 193 844

## Description

### RELATED APPLICATIONS

The present application claims priority from U.S. Provisional Patent Application No. 63/700,906 to Katz, filed September 30, 2024, entitled "Dynamic knowledge-based authentication for sharing digital items".

### TECHNICAL FIELD

Embodiments of the present disclosure are related generally to the field of information security, and specifically to dynamic knowledge-based authentication.

### BACKGROUND

In knowledge-based authentication, a user proves his or her identity based on the knowledge of one or more items of information. In dynamic knowledge-based authentication, the user does not submit these items of information in advance.

US10193844B1 describes a secure messaging system which identifies sensitive or restricted content within electronic messages such as E-mail, SMS or MMS text messages, or social network messages, and stores files including such content in a secure folder or bucket. After a first electronic message is identified as including sensitive or restricted content, a file including the sensitive or restricted content is stored in the secure folder or bucket, and a second electronic message including a link to the file or the secure folder or bucket is sent to each of the intended recipients of the first electronic message. When a recipient selects the link, the sensitive or restricted content is provided to the recipient over a secure connection (e.g., an SSL connection) rather than via E-mail. Additionally, recipients of the second electronic message may be authenticated by any method, e.g., an access policy and/or a single or multi-level authentication process.

US2020/274876A1 describes a method including receiving, by a server computer from a resource provider computer, interaction data comprising a user identifier, a resource provider identifier, and a resource identifier. The interaction data is associated with an interaction between a resource provider and a user. The server computer can then determine a set of attribute types specifically associated with the resource provider identifier and the resource identifier. The server can then determine a set of user attributes associated with the set of attribute types using the user identifier. The server computer can then execute a query comprising one or more questions on the set of user attributes to determine if the one or more questions are satisfied. Next, if the one or more questions are satisfied, then the server computer can perform additional processing associated with the interaction.

US2005/013291A1 describes a sender of a message uses a sender's portable telephone device to register, by way of a communication network, to a service agent: user's information, communication partner information, sending conditions, and a message. The service agent monitors whether the sending conditions are met, and when the sending conditions have been satisfied, executes processing to send the entered message to the receiver's portable telephone device of the communication partner that has been registered. The sending conditions include conditions relating to presence information that the communication partner can always access by way of a communication network through the communication partner's own communication terminal.

US2015/373021A1 describes a method and server that are provided for sending a secure message from a first computing device to a second computing device. A first computing device sends an encrypted, secure message a message server. The message server processes the secure message to unencrypt and separate the secure message contents into two or more separately downloadable message parts. The server sends a complex link to the second computing device, or sends a complex link to the first computing device for sending to the second computing device. When the complex link is selected by a user of the second computing device the server transmits a first part of the message to the second computing device. After transmitting the first part, the server then separately transmits a second part of the message to the second computing device.

US2016/072782A1 describes a secure messaging system providing a secure messaging exchange service to identified user. In one embodiment, the System comprises a User Record Server (URS) comprising a plurality of Private Electronic Mail (PEM) user accounts. A Secure Mail Delivery Agent (SMDA) provides a storage area for inbound sMail upon authentication via the URS that a Sender ID bundle in a message header of each incoming message matches the Sender ID of at least one of said plurality of PEM user accounts before delivering said incoming message. A first Secure Mail Transfer Agent (SMTA), coupled via a first encrypted connection to said SMDA and via a second connection to a public network, is configured to insert a Sender ID bundle into sMail headers when routing outbound sMail, and further configured to establish encrypted channels for the transmission of sMail over a public network.

### SUMMARY

In some cases, a first user wishes to share a sensitive, sentimental, and/or valuable digital item, such as a particular document or digital asset, with a second user. For such cases, it is important that the second user authenticate himself or herself, i.e., prove his or her identity. However, a shortcoming of conventional authentication techniques is the relative ease with which these techniques can be circumvented. For example, some conventional dynamic knowledge-based authentication techniques ask the user to provide public information such as a previous address. If this information is found by a malicious actor, the malicious actor can pass the authentication.

To address this shortcoming, embodiments of the present disclosure provide an improved dynamic knowledge-based authentication technique. Per this technique, the first user provides data related to the second user, and the authentication questions are then generated, by a computer processor, from this data. Thus, the first user can leverage his or her knowledge of the second user to help the processor generate authentication questions that only the second user can answer.

A computer software product is provided according to claim 1, a method is provided according to claim 14, and a system is provided according to claim 15.

Typically, the method further includes receiving, from the first user, one or more conditions for sharing the digital item with the second user, storing the digital item, and keeping the digital item in storage, without executing the authentication process, until the conditions are satisfied. For example, the first user can specify that the digital item is not to be shared before a certain date and/or before a certain event has transpired.

For some applications, the instructions cause the processors to generate each of the authentication questions, following an initial one of the authentication questions, only after receiving the response to an immediately-preceding one of the authentication questions.

The present disclosure will be more fully understood from the following detailed description of embodiments thereof, taken together with the drawings, in which:

### BRIEF DESCRIPTION OF THE DRAWINGS

Fig. 1 is a schematic illustration of a system for securely sharing a digital item, in accordance with some embodiments of the present disclosure;
Fig. 2 is a schematic illustration of a sender user interface, in accordance with some embodiments of the present disclosure;
Fig. 3 shows a flow diagram for a method for uploading a digital item, in accordance with some embodiments of the present disclosure;
Fig. 4 shows a flow diagram for a method for storing a digital item, in accordance with some embodiments of the present disclosure;
Fig. 5 shows a flow diagram for a method for sharing a digital item, in accordance with some embodiments of the present disclosure;
Fig. 6 shows a flow diagram for an authentication-exchange step, in accordance with some embodiments of the present disclosure; and
Fig. 7 is a schematic illustration of a receiver user interface, in accordance with some embodiments of the present disclosure.

### DETAILED DESCRIPTION

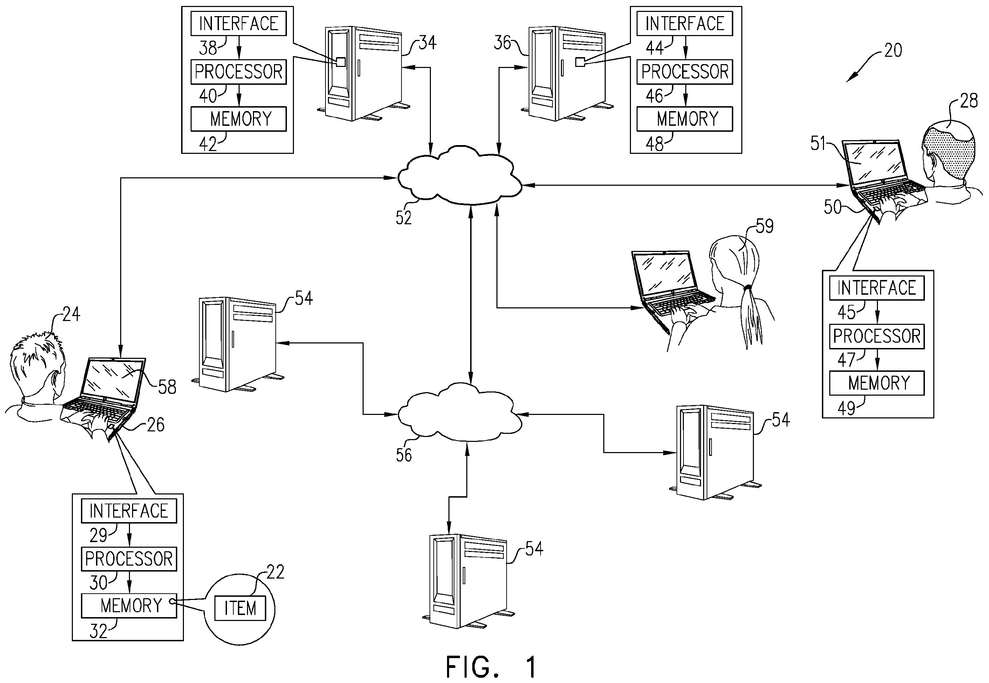

Reference is initially made to Fig. 1, which is a schematic illustration of a system 20 for securely sharing a digital item 22, in accordance with some embodiments of the present disclosure.

Fig. 1 depicts a first user, referred to below as a sender 24, using a computing device 26, such as a desktop computer, laptop computer, tablet computer, or smartphone, to share digital item 22 with a second user, referred to below as a receiver 28, using another computing device 50 comprising a display 51. In general, digital item 22 can include any type of item that is stored digitally. For example, the digital item can include one or more digital assets, such as a unit of cryptocurrency and/or a non-fungible token. Alternatively or additionally, the digital item can include a cryptographic key. Alternatively or additionally, the digital item can include at least one document file. Alternatively or additionally, the digital item can include one or more other types of files such as picture files, video files, or executable files. For cases in which the digital item includes multiple sub-items (e.g., multiple files), the digital item is referred to herein as a "capsule."

Device 26 comprises a communication interface 29, a processor 30, and a memory 32, comprising a volatile and/or non-volatile memory. Processor 30 is configured to upload the digital item, via communication interface 29, to a network 52, typically the Internet. Memory 32 is configured to store digital item 22 at least until the digital item is uploaded.

Likewise, device 50 comprises a communication interface 45, a processor 47, and a memory 49, comprising a volatile and/or non-volatile memory. Processor 47 is configured to download the digital item, via communication interface 45, from network 52, and to store the digital item in memory 49.

Typically, in addition to processor 30 and processor 47, system 20 comprises one or more other processors. Typically, at least some of these processors belong to one or more servers, which are configured to communicate with each other, with device 26, with device 50, and/or with any other device over network 52 and/or any other network, such as a cellular network.

For example, in some embodiments, system 20 comprises a distribution server 34 and a receiver server 36. Distribution server 34 comprises a communication interface 38, a processor 40, and a memory 42. Likewise, receiver server 36 comprises a communication interface 44, a processor 46, and a memory 48. Processor 40 and processor 46 are configured to exchange communication, with one another and/or any other device, via communication interface 38 and communication interface 44, respectively.

The processors of system 20 are configured to perform, collectively, the processing functionality described herein. In general, this functionality may be divided between the processors in accordance with any suitable scheme. For example, per one scheme described below, processor 30 encrypts and fragments digital item 22 and then uploads the encrypted fragments (or "portions") of the digital item to distribution server 34, processor 40 of the distribution server securely distributes the encrypted fragments for storage, and processor 46 of receiver server 36 authenticates receiver 28 and, following the authentication, retrieves, decrypts, and reassembles the digital item, and then shares the digital item with receiver 28. Alternatively, for example, the encryption and fragmentation are performed by processor 40, and/or the decryption and reassembly are performed by processor 47.

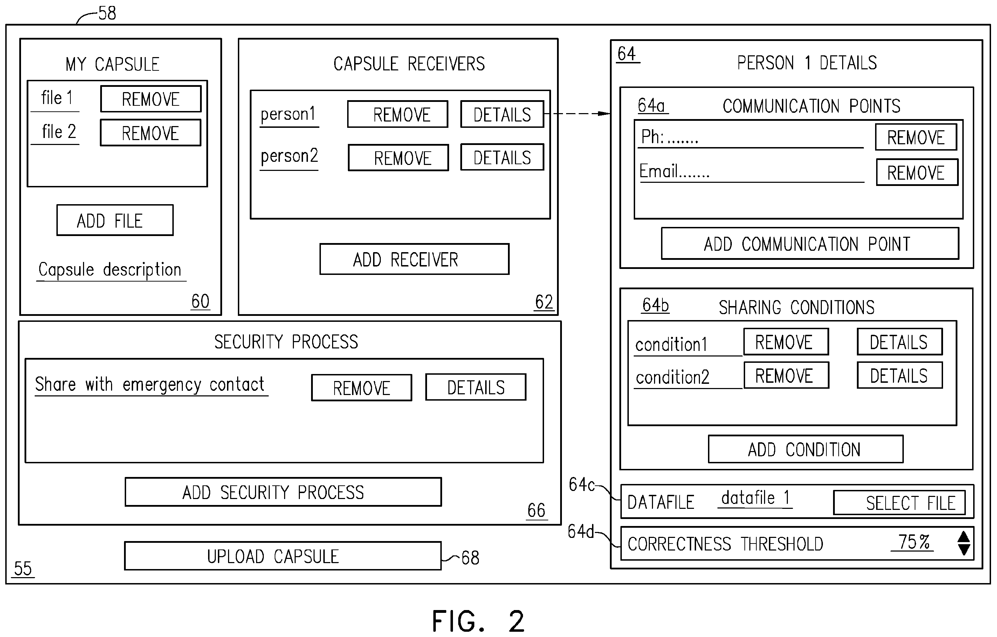

Typically, processor 30 is configured to display, on a display 58 of device 26, a sender user interface 55 (Fig. 2) via which sender 24 defines the digital item, e.g., by selecting one or more files from memory 32, and further provides parameters for the sharing, as further described below with reference to Fig. 2. The sender user interface can execute locally, on device 26, or remotely, on any suitable server (e.g., distribution server 34).

Typically, processor 40 is configured to distribute the uploaded portions of the encrypted digital item to different respective servers for storage. For example, in some embodiments, the processor distributes the portions to different respective servers 54 on a blockchain network 56. Typically, for enhanced security, the servers are selected at random, and are geographically distributed.

In some embodiments, for enhanced security, the encryption key used for the encryption is also fragmented prior to being uploaded to the distribution server. Processor 40 distributes the portions of the encryption key to different respective servers, such as different respective servers 54, for storage.

Fig. 1 also shows an emergency contact 59. In some embodiments, as further described below with reference to Fig. 2, digital item 22 is shared with emergency contact 59 instead of with receiver 28. In some embodiments, the emergency contact must also successfully complete an authentication process, as described herein, to gain access to the digital item.

In general, each of the processors described herein may be embodied as a single processor, or as a cooperatively networked or clustered set of processors. The functionality of the processor may be implemented solely in hardware, e.g., using one or more fixed-function or general-purpose integrated circuits, Application-Specific Integrated Circuits (ASICs), and/or Field-Programmable Gate Arrays (FPGAs). Alternatively, this functionality may be implemented at least partly in software. For example, the processor may be embodied as a programmed processor comprising, for example, a central processing unit (CPU) and/or a Graphics Processing Unit (GPU). Program code, including software programs, and/or data may be loaded for execution and processing by the CPU and/or GPU. The program code and/or data may be downloaded to the processor in electronic form, over a network, for example. Alternatively or additionally, the program code and/or data may be provided and/or stored on non-transitory tangible media, such as magnetic, optical, or electronic memory. Such program code and/or data, when provided to the processor, produce a machine or special-purpose computer, configured to perform the tasks described herein.

Reference is now made to Fig. 2, which is a schematic illustration of sender user interface 55 displayed on display 58, in accordance with some embodiments of the present disclosure.

Typically, sender 24 (Fig. 1) defines digital item 22 (Fig. 1) via user interface 55. For example, in some embodiments, a window 60 allows the sender to add and remove files from a capsule. In some embodiments, user interface 55 (e.g., via window 60) allows the sender to enter a general description of the digital item.

Typically, the sender further designates, e.g., via another window 62, the receiver(s) with whom the digital item is to be shared. The sender further provides information for each of the receivers, e.g., via another window 64. The information includes at least one communication point, such as a phone number and/or email address, of the receiver, which the sender can enter, for example, via a sub-window 64a.

In some embodiments, the information further includes one or more conditions for sharing the digital item with the receiver, which the sender can enter, for example, via a sub-window 64b. The digital item is kept in storage, without execution of any process for authenticating the receiver, until the conditions are satisfied.

One example of a condition is a time-based condition. For example, the sender can specify that the digital item is to be shared only on a particular date (e.g., a birthday or an anniversary), only after a particular date, only before a particular date, or only during a range of dates.

Another example is the occurrence of a particular event. For example, the sender can specify that a will is to be shared only after the sender dies, or that a digital asset is to be shared only after a contract is signed. For such a condition, the occurrence of the event can be verified from publicly-available online information and/or from relevant uploaded content, such as an uploaded death certificate or contract.

Another example is the receipt, or lack thereof, of a particular input from the sender, the receiver, or any other user. For example, the sender can specify that the digital item (e.g., the sender's will) is to be shared only if the sender does not respond to a message (e.g., delivered via email) within a particular amount of time. Alternatively, the sender can specify that the digital item (e.g., a digital asset) is to be shared only after the sender approves the sharing.

Another example is any combination of the above, such as the occurrence of a particular event after a particular date, or the receipt of an input from the sender before a particular date.

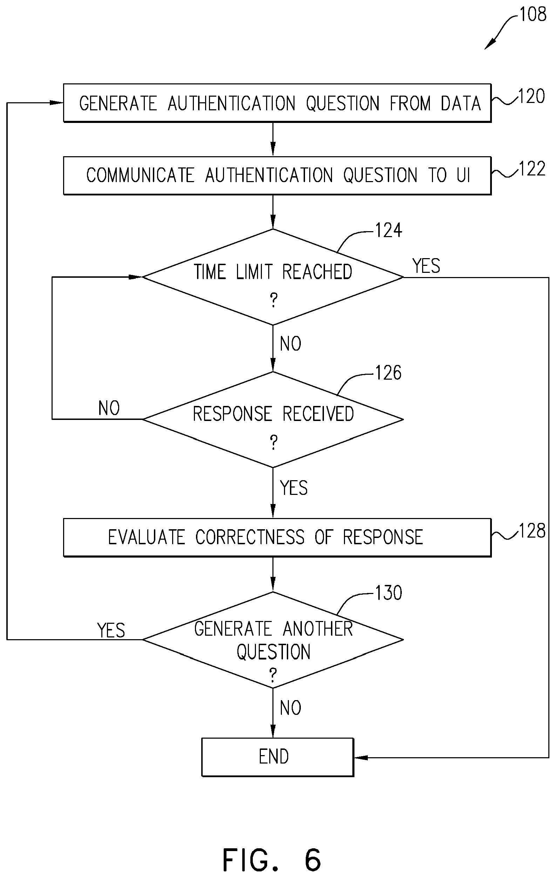

The information further includes data related to the receiver, which can be entered, for example, via a sub-window 64c. The data is used to generate authentication questions for authenticating the receiver in an authentication process, as further described below with reference to Fig. 6. Typically, for enhanced security, at least some of the data is not publicly available, but rather, is known only to a small number of people, e.g., only to the sender and receiver.

For example, the sender can provide a file containing text composed by the sender. The text may include, for example, a description of the sender's relationship with the receiver and/or experiences shared by the sender and receiver. Alternatively or additionally, the data includes a link to a social network profile of the receiver.

In some embodiments, the information further includes a correctness threshold, which the sender can specify, for example, via a sub-window 64d. The correctness threshold is used in the authentication process, as further described below with reference to Fig. 6. Alternatively or additionally, the information further includes a maximum number of authentication questions to be asked to the receiver, which the sender can specify, for example, via sub-window 64d or another sub-window. The sender can thus tailor the strictness of the authentication process to the sensitivity of the digital item and/or the identity of the receiver.

In some embodiments, the sender further designates, e.g., via another window 66, one or more security processes, each of which is to be executed in response to one or more conditions being satisfied. Alternatively or additionally, one or more security processes are designated automatically. In some cases, depending on the conditions, a security process is executed instead of the authentication process.

Examples of security processes include sharing the digital item with an emergency contact, deleting the digital item, and providing access to a decoy digital item instead of the actual digital item. In some embodiments, the sender provides the decoy digital item.

For example, the sender can specify that the security process is to be executed after the passage of a certain amount of time. For example, in addition to specifying that a digital asset is to be shared with the receiver only after a contract is signed, the sender can specify that the digital asset is to be shared with an emergency contact (e.g., a relative or an attorney of the sender) if no signed contract is received by a particular date.

Other examples of conditions for the execution of a security process are a failed authentication process, the occurrence of a particular event, a condition on the location of the receiver, and the receipt, or lack thereof, of a particular input from the sender, the receiver, or any other user. For example, the sender can specify that a digital item is to be shared with an emergency contact in response to the death of the receiver, in response to an input from the emergency contact, and/or in response to the lack of an input from the receiver.

Following the definition of the digital item and specification of associated parameters as described above, the sender uploads the digital item together with the associated parameters, e.g., via an upload button 68.

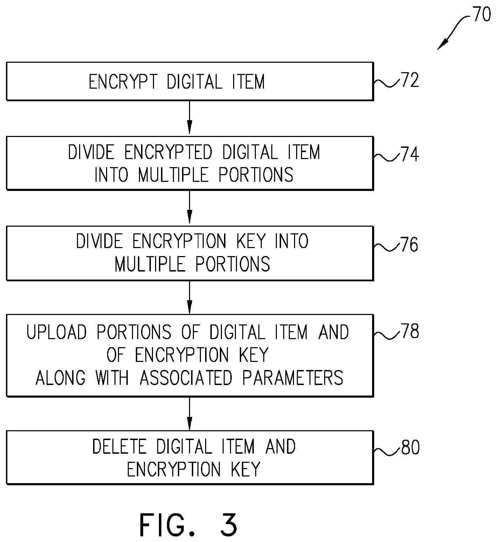

In this regard, reference is now made to Fig. 3, which shows a flow diagram for a method 70 for uploading a digital item, which is executed by processor 30 (Fig. 1) of the sender's device, in accordance with some embodiments of the present disclosure.

Typically, the digital item is encrypted and/or divided into multiple portions prior to being stored. For example, in some embodiments, method 70 begins with an encrypting step 72, at which the digital item is encrypted by the processor. Next, at a dividing step 74, the encrypted digital item is divided into multiple portions. Alternatively, the digital item is first divided into multiple portions, and then each of the portions is separately encrypted. In some embodiments, at another dividing step 76, the encryption key that was used for the encryption is also divided into multiple portions. Subsequently, at an uploading step 78, the portions of the digital item and of the encryption key, along with the associated sharing parameters (including the communication point(s) for each receiver), are uploaded, e.g., to the distribution server. In some embodiments, following the upload, the digital item and encryption key are deleted from the sender's device at a deleting step 80.

In some embodiments, following the upload, processor 30 or processor 40 (Fig. 1) notifies the receiver(s), via the provided communication point(s), that the digital item will be shared with them in the future, pending a successful authentication process. Optionally, the notification includes the general description of the digital item provided by the sender.

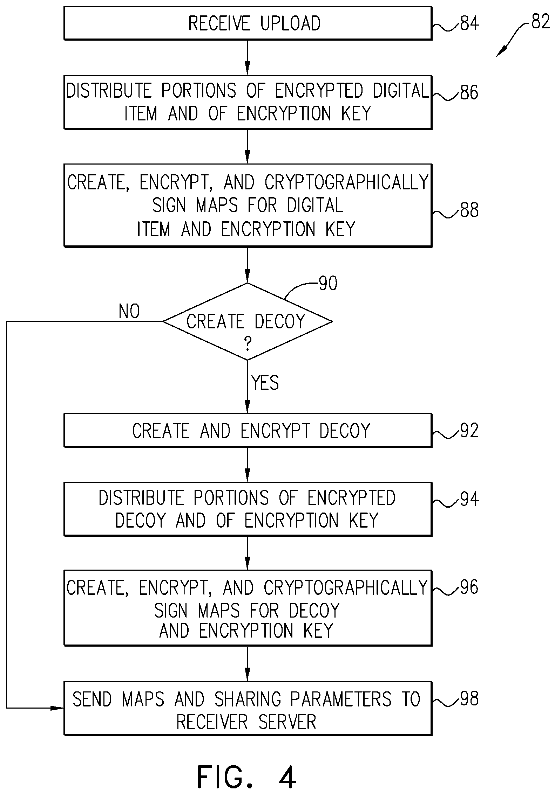

Reference is now made to Fig. 4, which shows a flow diagram for a method 82 for storing a digital item, which is executed by processor 40 (Fig. 1) of the distribution server, in accordance with some embodiments of the present disclosure.

In some embodiments, processor 40 receives the upload from the sender's device at an upload-receiving step 84. Next, at a distributing step 86, the processor distributes the received portions of the encrypted digital item and of the encryption key for storage, e.g., on servers 54 (Fig. 1). Typically, the processor then creates, encrypts, and signs, with a cryptographic signature, respective maps for the digital item and encryption key, at a map-creating step 88. Each map describes the manner in which the digital item or encryption key was distributed, and hence, allows the digital item or encryption key to be reassembled.

Next, the processor checks, at a checking step 90, whether a decoy digital item is to be created. For example, the processor may check whether the sender specified, as a security process, the sharing of a decoy digital item, without providing the decoy digital item. If yes, the processor creates and encrypts a decoy digital item at a decoy-creating step 92.

Typically, the processor creates the decoy digital item based on the digital item, such that, for anyone other than the intended receiver of the digital item, the decoy is easily confused with the digital item. For example, the decoy may have the same format, and/or the same type of information, as the digital item, but with important details (e.g., important dates, names, and/or monetary amounts) omitted or replaced.

Alternatively, as described above with reference to Fig. 2, the sender provides the decoy in the upload. In such embodiments, the decoy can be encrypted either before or after the upload.

Typically, the decoy is then stored. In some embodiments, to further increase the confusability of the decoy with the digital item, the processor executes the same process for storing the decoy digital item as for storing the digital item. For example, in some embodiments, at a distributing step 94, the processor distributes portions of the encrypted decoy and of the encryption key, which was used to encrypt the decoy, for storage, e.g., on servers 54 (Fig. 1). Subsequently, the processor creates, encrypts, and signs, with a cryptographic signature, respective maps for the decoy and encryption key, at a map-creating step 96.

Following the storage of the decoy, or if no decoy is provided, the processor sends the maps, along with the sharing parameters, to receiver server 36 (Fig. 1) at a sending step 98.

Typically, for enhanced security, the uploaded data related to each receiver, from which the authentication questions are to be generated, is not stored explicitly. Rather, the data is stored only implicitly, typically in memory 48 of receiver server 36, by virtue of being incorporated into a data model, such as a large language model.

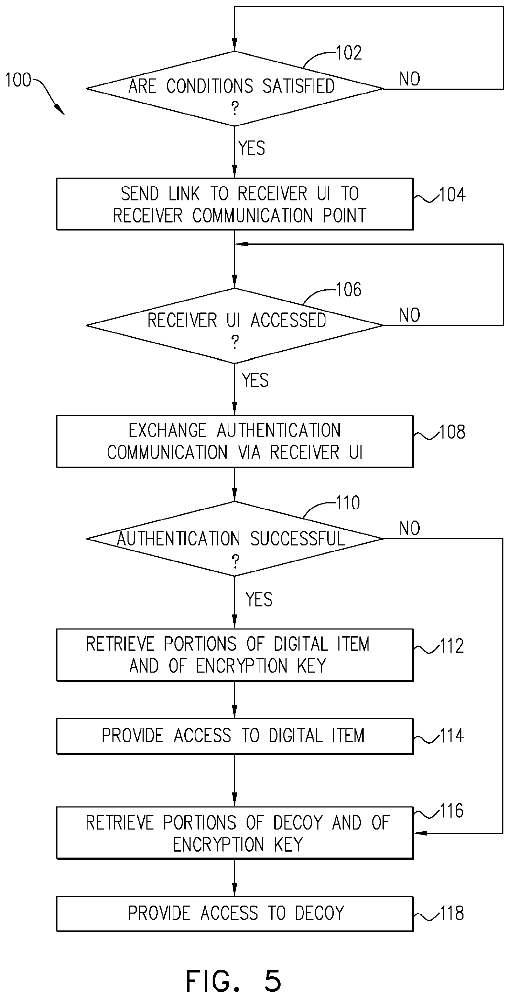

Reference is now made to Fig. 5, which shows a flow diagram for a method 100 for sharing a digital item, in accordance with some embodiments of the present disclosure.

In some embodiments, subsequently to receiving the maps and sharing parameters, processor 46 (Fig. 1) of the receiver server repeatedly (e.g., periodically) checks, at a checking step 102, whether the sharing conditions are satisfied. For some sharing conditions, the processor, at checking step 102, solicits communication (e.g., via an email or text message) from the sender, the receiver, and/or any other user. For example, for a sharing condition that requires the sender to fail to respond to a message within a particular amount of time, the processor may send the message to the sender, thus prompting the sender to respond, and then check if the sender responds within the particular amount of time. For a sharing condition that requires the sender to approve the sharing, the processor may ask the sender whether the sharing is approved. Alternatively or additionally, for a condition requiring the occurrence of a particular event, the processor may ask the sender to confirm the occurrence of the particular event. Alternatively or additionally, the processor, at checking step 102, analyzes any uploaded documents and/or online information, e.g., to check for the occurrence of a particular event.

In response to the sharing conditions being satisfied (or if no sharing conditions were specified), the processor executes an authentication process. In this process, the processor provides, to the specified communication point of the receiver, access to one or more authentication questions, and receives respective responses to the authentication questions. For example, in some embodiments, the processor communicates the authentication questions directly to the communication point, and receives the responses directly from the communication point. Alternatively, as assumed in Fig. 5, the processor sends, to the communication point, a link to a receiver user interface at a link-sending step 104, and then displays the authentication questions via the receiver user interface. For example, in some embodiments, after sending the link, the processor repeatedly checks, at another checking step 106, whether the receiver user interface was accessed. In response to the receiver user interface being accessed, the processor exchanges authentication communication, by asking the authentication questions and receiving the respective responses, via the receiver user interface, at an authentication-exchange step 108, which is further described below with reference to Fig. 6.

Following the authentication process, the processor checks, at another checking step 110, whether the authentication was successful. In particular, the processor determines the outcome of the authentication process based on the correctness of the responses. For example, in some embodiments, the processor determines the outcome of the authentication process by comparing the percentage of the responses that are correct to a predefined correctness threshold. As described above with reference to Fig. 2, in some embodiments, the correctness threshold is provided by the sender.

If the authentication process was successful, the processor provides access to the digital item at an access-providing step 114, e.g., by allowing the user of the receiver user interface to download the digital item. Typically, prior to access-providing step 114, the processor retrieves the portions of the digital item and of the encryption key, at a retrieving step 112, based on the maps received from the distribution server. Subsequently, in executing access-providing step 114, the processor reassembles the encryption key, and decrypts and reassembles the digital item.

Alternatively, in some embodiments, if the authentication process was not successful, the processor provides access to the decoy at a decoying step 118, e.g., by allowing the user of the receiver user interface to download the decoy in place of the digital item. Typically, prior to decoying step 118, the processor retrieves the portions of the decoy and of the encryption key, at a retrieving step 116, based on the maps received from the distribution server. Subsequently, in executing decoying step 118, the processor reassembles the encryption key, and decrypts and reassembles the decoy.

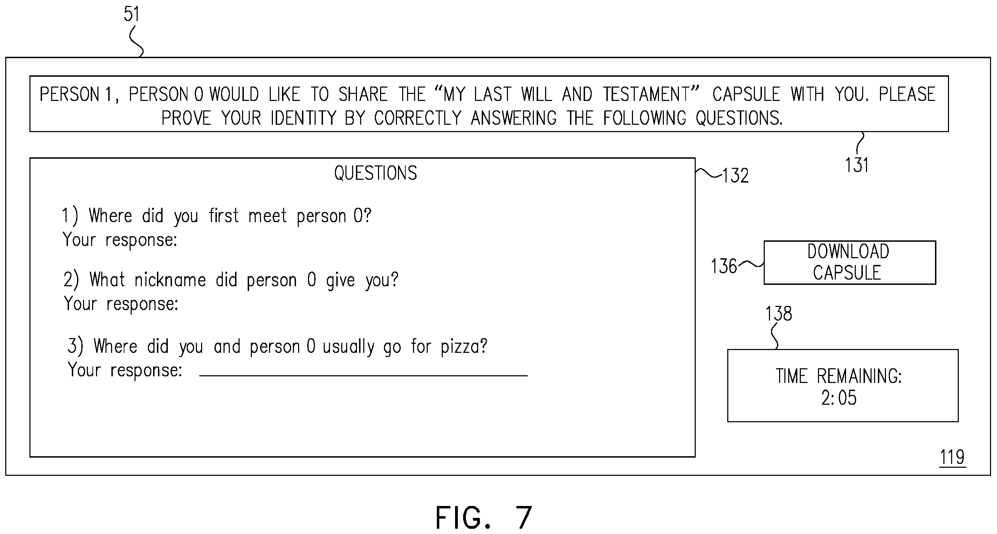

Reference is now made to Fig. 6, which shows a flow diagram for authentication-exchange step 108, in accordance with some embodiments of the present disclosure. Reference is also made to Fig. 7, which is a schematic illustration of a receiver user interface 119 displayed on display 51 of the receiver's device, in accordance with some embodiments of the present disclosure.

In executing authentication-exchange step 108, processor 46 (Fig. 1) of the receiver server, using suitable natural language processing techniques, generates one or more authentication questions from the data provided by the sender, and poses these questions to the user who is, potentially, the receiver. The authentication questions are generated using a data model, that is, a large language model, that incorporates the data provided by the sender.

For example, in some embodiments, the processor displays the questions via receiver user interface 119. Typically, the receiver user interface includes an explanatory message 131, which explains the purpose of the authentication process and, in some embodiments, includes the description of the digital item provided by the sender.

Typically, the processor imposes a time limit on the authentication process. In some embodiments, a window 138 in the receiver user interface shows the remaining time.

Typically, the processor generates each of the authentication questions, following the initial authentication question, only after receiving the response to the immediately-preceding authentication question. Thus, advantageously, there is less chance of an unauthorized party accessing any authentication question before the question is posed. Furthermore, the processor can tailor each authentication question to the user's responses thus far.

For example, in some embodiments, each authentication question is generated at a question-generating step 120 and communicated to the receiver user interface at a question-communicating step 122. Following question-communicating step 122, the processor continually checks for a response at a checking step 126. Furthermore, for embodiments in which a time limit is imposed, the processor continually checks, at a checking step 124, whether the time limit was reached. If yes, the authentication process ends (unsuccessfully).

Following the receipt of a response, the processor, using suitable natural language processing techniques, evaluates the correctness of the response at an evaluating step 128. Next, the processor decides, at a deciding step 130, whether to generate another authentication question. If not, the process ends. Otherwise, the next authentication question is generated.

Typically, the processor performs evaluating step 128 based on a correctness threshold and a predefined maximum number of questions, each of which may be specified by the sender, as described above with reference to Fig. 2. For example, it will be assumed that the maximum number of questions is five and that the correctness threshold is 80%. If the response was correct, the processor may check whether a total of four correct responses were received. If yes, the process ends successfully, as there is no need for another authentication question. On the other hand, if the response was incorrect, the processor may check whether another incorrect response was previously received. If yes, the process ends unsuccessfully.

In some embodiments, each question is displayed in a window 132 of the receiver user interface. Optionally, window 132 continues to display the previous questions and responses.

Typically, the receiver user interface further includes a download button 136. For embodiments in which a decoy is provided, download button 136 is enabled following the completion of the authentication process, regardless of whether the authentication process was successful. Pressing the download button initiates the download of the digital item or of the decoy.

## Claims

1. A computer software product comprising a tangible non-transitory computer-readable medium in which program instructions are stored, which instructions, when read by one or more processors (30, 40, 46, 47), cause the processors (30, 40, 46, 47) to:
receive, from a first user:
a digital item (22) designated for sharing with at least one second user,
at least one communication point for the second user, and
data related to the second user,
execute an authentication process, by:
generating one or more authentication questions from the data using a large language model,
providing, to the communication point, access to the authentication questions, and
receiving respective responses to the authentication questions,
determine an outcome of the authentication process based on a correctness of the responses, and
provided the authentication process is successful, provide access to the digital item (22).

2. The computer software product according to claim 1, wherein the digital item (22) includes at least one document, a digital asset, and/or text composed by the first user.

3. The computer software product according to claim 1 or claim 2, wherein the instructions further cause the processors (30, 40, 46, 47) to:
receive, from the first user, one or more conditions for sharing the digital item (22) with the second user,
store the digital item (22), and
keep the digital item (22) in storage, without executing the authentication process, until the conditions are satisfied.

4. The computer software product according to claim 3, wherein the instructions further cause the processors (30, 40, 46, 47) to encrypt the digital item (22) prior to storing the digital item (22), and wherein the instructions cause the processors (30, 40, 46, 47) to provide access to the digital item (22) by decrypting the digital item (22).

5. The computer software product according to claim 4, wherein the instructions cause the processors (30, 40, 46, 47) to encrypt the digital item (22) using an encryption key, wherein the instructions further cause the processors (30, 40, 46, 47) to distribute portions of the encryption key to different respective servers (54) for storage, and wherein the instructions cause the processors (30, 40, 46, 47) to decrypt the digital item (22) by:
reassembling the portions of the encryption key, and
using the encryption key, decrypting the digital item (22).

6. The computer software product according to claim 3, wherein the instructions cause the processors (30, 40, 46, 47) to store the digital item (22) by distributing portions of the digital item (22) to different respective servers (54) for storage, and wherein the instructions cause the processors (30, 40, 46, 47) to provide access to the digital item (22) by reassembling the portions.

7. The computer software product according to claim 1 or claim 2, wherein the instructions cause the processor to determine the outcome of the authentication process by comparing a percentage of the responses that are correct to a predefined correctness threshold, wherein the instructions further cause the processors (30, 40, 46, 47) to receive the correctness threshold from the first user.

8. The computer software product according to claim 1 or claim 2, wherein the instructions further cause the processors (30, 40, 46, 47) to execute a security process in response to one or more conditions being satisfied.

9. The computer software product according to claim 8, wherein:
the conditions include the authentication process not being successful;
the instructions cause the processors (30, 40, 46, 47) to execute the security process instead of the authentication process;
the security process includes sharing the digital item (22) with an emergency contact; and/or
the security process includes deleting the digital item (22).

10. The computer software product according to claim 8, wherein the security process includes providing access to a decoy digital item instead of the digital item (22).

11. The computer software product according to claim 10, wherein the instructions further cause the processors (30, 40, 46, 47) to create the decoy digital item based on the digital item (22).

12. The computer software product according to claim 10, wherein the instructions further cause the processors (30, 40, 46, 47) to store the digital item (22) and the decoy digital item in response to receiving the digital item (22).

13. The computer software product according to claim 12, wherein the instructions cause the processors (30, 40, 46, 47) to execute the same process for storing the decoy digital item as for storing the digital item (22).

14. A method, comprising:
using one or more processors (30, 40, 46, 47):
receiving, from a first user:
a digital item (22) designated for sharing with at least one second user,
at least one communication point for the second user, and
data related to the second user;
executing an authentication process, by:
generating one or more authentication questions from the data using a large language model,
providing, to the communication point, access to the authentication questions, and
receiving respective responses to the authentication questions;
determining an outcome of the authentication process based on a correctness of the responses; and
provided the authentication process is successful, providing access to the digital item (22).

15. A system, comprising:
a communication interface; and
one or more processors (30, 40, 46, 47), configured to:
receive, from a first user:
a digital item (22) designated for sharing with at least one second user,
at least one communication point for the second user, and
data related to the second user,
execute an authentication process, by:
generating one or more authentication questions from the data using a large language model, and
via the communication interface:
providing, to the communication point, access to the authentication questions, and
receiving respective responses to the authentication questions,
determine an outcome of the authentication process based on a correctness of the responses, and
provided the authentication process is successful, provide access to the digital item (22).

## Patentansprüche

1. Computersoftwareprodukt, umfassend ein materielles nichtflüchtiges computerlesbares Medium, in dem Programmanweisungen gespeichert sind, wobei die Anweisungen, wenn sie von einem oder mehreren Prozessoren (30, 40, 46, 47) gelesen werden, die Prozessoren (30, 40, 46, 47) zu Folgendem veranlassen:
zu empfangen, von einem ersten Nutzer:
ein digitales Element (22), das zum gemeinsamen Nutzen mit mindestens einem zweiten Nutzer bestimmt ist,
mindestens einen Kommunikationspunkt für den zweiten Nutzer und
Daten, die sich auf den zweiten Nutzer beziehen,
einen Authentifizierungsprozess auszuführen, durch:
Erzeugen einer oder mehrerer Authentifizierungsfragen aus den Daten unter Verwendung eines großen Sprachmodells,
Gewähren, für den Kommunikationspunkt, eines Zugriffs auf die Authentifizierungsfragen und
Empfangen jeweiliger Antworten auf die Authentifizierungsfragen,
ein Ergebnis des Authentifizierungsprozesses auf Grundlage einer Korrektheit der Antworten zu ermitteln und
sofern der Authentifizierungsprozess erfolgreich ist, Zugriff auf das digitale Element (22) zu gewähren.

2. Computersoftwareprodukt nach Anspruch 1, wobei das digitale Element (22) mindestens ein Dokument, ein digitales Asset und/oder Text, verfasst vom ersten Nutzer, einschließt.

3. Computersoftwareprodukt nach Anspruch 1 oder Anspruch 2, wobei die Anweisungen weiter die Prozessoren (30, 40, 46, 47) zu Folgendem veranlassen:
vom ersten Nutzer eine oder mehrere Bedingungen zum gemeinsamen Nutzen des digitalen Elements (22) mit dem zweiten Nutzer zu erhalten,
das digitale Element zu speichern (22) und
das digitale Element (22) im Speicher zu halten, ohne dass der Authentifizierungsprozess ausgeführt wird, bis die Bedingungen erfüllt sind.

4. Computersoftwareprodukt nach Anspruch 3, wobei die Anweisungen weiter die Prozessoren (30, 40, 46, 47) veranlassen, das digitale Element (22) vor dem Speichern des digitalen Elements zu verschlüsseln, und wobei die Anweisungen die Prozessoren (30, 40, 46, 47) veranlassen, Zugriff auf das digitale Element (22) durch Entschlüsseln des digitalen Elements (22) zu gewähren.

5. Computersoftwareprodukt nach Anspruch 4, wobei die Anweisungen die Prozessoren (30, 40, 46, 47) veranlassen, das digitale Element (22) unter Verwendung eines Verschlüsselungsschlüssels zu verschlüsseln, wobei die Anweisungen die Prozessoren (30, 40, 46, 47) weiter veranlassen, Teile des Verschlüsselungsschlüssels zur Speicherung an verschiedene jeweilige Server (54) zu verteilen, und wobei die Anweisungen die Prozessoren (30, 40, 46, 47) veranlassen, das digitale Element (22) durch Folgendes zu entschlüsseln:
erneutes Zusammensetzen der Teile des Verschlüsselungsschlüssels und
unter Verwendung des Verschlüsselungsschlüssels Entschlüsseln des digitalen Elements (22).

6. Computersoftwareprodukt nach Anspruch 3, wobei die Anweisungen die Prozessoren (30, 40, 46, 47) veranlassen, das digitale Element (22) zu speichern, durch Verteilen von Teilen des digitalen Elements (22) zur Speicherung an verschiedene jeweilige Server (54), und wobei die Anweisungen die Prozessoren (30, 40, 46, 47) veranlassen, Zugriff auf das digitale Element (22) durch erneutes Zusammensetzen der Teile zu gewähren.

7. Computersoftwareprodukt nach Anspruch 1 oder 2, wobei die Anweisungen den Prozessor veranlassen, das Ergebnis des Authentifizierungsprozesses zu bestimmen durch Vergleichen eines Prozentsatzes der Antworten, die korrekt sind, mit einem vordefinierten Korrektheitsschwellenwert, wobei die Anweisungen die Prozessoren (30, 40, 46, 47) weiter veranlassen, den Korrektheitsschwellenwert vom ersten Nutzer zu empfangen.

8. Computersoftwareprodukt nach Anspruch 1 oder Anspruch 2, wobei die Anweisungen die Prozessoren (30, 40, 46, 47) weiter veranlassen, als Reaktion darauf, dass eine oder mehrere Bedingungen erfüllt sind, einen Sicherheitsprozess auszuführen.

9. Computersoftwareprodukt nach Anspruch 8, wobei:
die Bedingungen einschließen, dass der Authentifizierungsprozess nicht erfolgreich ist;
die Anweisungen die Prozessoren (30, 40, 46, 47) veranlassen, den Sicherheitsprozess anstelle des Authentifizierungsprozesses auszuführen;
der Sicherheitsprozess das gemeinsame Nutzen des digitalen Elements (22) mit einem Notfallkontakt einschließt und/oder
der Sicherheitsprozess das Löschen des digitalen Elements (22) einschließt.

10. Computersoftwareprodukt nach Anspruch 8, wobei der Sicherheitsprozess das Gewähren eines Zugriffs auf ein digitales Köderelement anstelle des digitalen Elements (22) einschließt.

11. Computersoftwareprodukt nach Anspruch 10, wobei die Anweisungen die Prozessoren (30, 40, 46, 47) weiter veranlassen, das digitale Köderelement auf Grundlage des digitalen Elements (22) zu erzeugen.

12. Computersoftwareprodukt nach Anspruch 10, wobei die Anweisungen die Prozessoren (30, 40, 46, 47) weiter veranlassen, das digitale Element (22) und das digitale Köderelement als Reaktion auf das Empfangen des digitalen Elements (22) zu speichern.

13. Computersoftwareprodukt nach Anspruch 12, wobei die Anweisungen die Prozessoren (30, 40, 46, 47) veranlassen, denselben Prozess zum Speichern des digitalen Köderelements wie zum Speichern des Digitalelements (22) auszuführen.

14. Verfahren, umfassend:
unter Verwendung eines oder mehrerer Prozessoren (30, 40, 46, 47):
Empfangen, von einem ersten Nutzer:
eines digitalen Elements (22), das zum gemeinsamen Nutzen mit mindestens einem zweiten Nutzer bestimmt ist,
mindestens eines Kommunikationspunkts für den zweiten Nutzer und
Daten, die sich auf den zweiten Nutzer beziehen;
Ausführen eines Authentifizierungsprozesses, durch:
Erzeugen einer oder mehrerer Authentifizierungsfragen aus den Daten unter Verwendung eines großen Sprachmodells,
Gewähren, für den Kommunikationspunkt, eines Zugriffs auf die Authentifizierungsfragen und
Empfangen jeweiliger Antworten auf die Authentifizierungsfragen,
Ermitteln eines Ergebnisses des Authentifizierungsprozesses auf Grundlage einer Korrektheit der Antworten und
sofern der Authentifizierungsprozess erfolgreich ist, Gewähren eines Zugriffs auf das digitale Element (22).

15. System, umfassend:
eine Kommunikationsschnittstelle und
einen oder mehrere Prozessoren (30, 40, 46, 47), zu Folgendem konfiguriert:
zu empfangen, von einem ersten Nutzer:
ein digitales Element (22), das zum gemeinsamen Nutzen mit mindestens einem zweiten Nutzer bestimmt ist,
mindestens einen Kommunikationspunkt für den zweiten Nutzer und
Daten, die sich auf den zweiten Nutzer beziehen,
einen Authentifizierungsprozess auszuführen, durch:
Erzeugen einer oder mehrerer Authentifizierungsfragen aus den Daten unter Verwendung eines großen Sprachmodells und
über die Kommunikationsschnittstelle:
Gewähren, für den Kommunikationspunkt, eines Zugriffs auf die Authentifizierungsfragen und
Empfangen jeweiliger Antworten auf die Authentifizierungsfragen,
ein Ergebnis des Authentifizierungsprozesses auf Grundlage einer Korrektheit der Antworten zu ermitteln und
sofern der Authentifizierungsprozess erfolgreich ist, Zugriff auf das digitale Element (22) zu gewähren.

## Revendications

1. Produit logiciel informatique comprenant un support matériel non transitoire lisible par ordinateur dans lequel des instructions de programme sont stockées, lesquelles instructions, lorsqu'elles sont lues par un ou plusieurs processeurs (30, 40, 46, 47), amènent les processeurs (30, 40, 46, 47) à :
recevoir, d'un premier utilisateur :
un élément numérique (22) destiné à être partagé avec au moins un second utilisateur,
au moins un point de communication pour le second utilisateur, et
des données se rapportant au second utilisateur,
exécuter un processus d'authentification, en :
générant une ou plusieurs questions d'authentification à partir des données à l'aide d'un grand modèle de langage,
fournissant, au point de communication, un accès aux questions d'authentification, et
recevant des réponses respectives aux questions d'authentification,
déterminer un résultat du processus d'authentification sur la base de l'exactitude des réponses, et
à condition que le processus d'authentification réussisse, fournir un accès à l'élément numérique (22).

2. Produit logiciel informatique selon la revendication 1, dans lequel l'élément numérique (22) inclut au moins un document, un actif numérique et/ou un texte rédigé par le premier utilisateur.

3. Produit logiciel informatique selon la revendication 1 ou la revendication 2, dans lequel les instructions amènent en outre les processeurs (30, 40, 46, 47) à :
recevoir, du premier utilisateur, une ou plusieurs conditions pour partager l'élément numérique (22) avec le second utilisateur,
stocker l'élément numérique (22), et
conserver l'élément numérique (22) en stockage, sans exécuter le processus d'authentification, jusqu'à ce que les conditions soient remplies.

4. Produit logiciel informatique selon la revendication 3, dans lequel les instructions amènent en outre les processeurs (30, 40, 46, 47) à crypter l'élément numérique (22) avant de stocker l'élément numérique (22), et dans lequel les instructions amènent les processeurs (30, 40, 46, 47) à fournir un accès à l'élément numérique (22) en décryptant l'élément numérique (22).

5. Produit logiciel informatique selon la revendication 4, dans lequel les instructions amènent les processeurs (30, 40, 46, 47) à crypter l'élément numérique (22) à l'aide d'une clé de cryptage, dans lequel les instructions amènent en outre les processeurs (30, 40, 46, 47) à distribuer des parties de la clé de cryptage à différents serveurs respectifs (54) pour stockage, et dans lequel les instructions amènent les processeurs (30, 40, 46, 47) à décrypter l'élément numérique (22) en :
réassemblant les parties de la clé de cryptage, et
utilisant la clé de cryptage, décryptant l'élément numérique (22).

6. Produit logiciel informatique selon la revendication 3, dans lequel les instructions amènent les processeurs (30, 40, 46, 47) à stocker l'élément numérique (22) en distribuant des parties de l'élément numérique (22) à différents serveurs respectifs (54) pour le stockage, et dans lequel les instructions amènent les processeurs (30, 40, 46, 47) à fournir un accès à l'élément numérique (22) en réassemblant les parties.

7. Produit logiciel informatique selon la revendication 1 ou la revendication 2, dans lequel les instructions amènent le processeur à déterminer le résultat du processus d'authentification en comparant un pourcentage des réponses qui sont correctes à un seuil d'exactitude prédéfini, dans lequel les instructions amènent en outre les processeurs (30, 40, 46, 47) à recevoir le seuil d'exactitude du premier utilisateur.

8. Produit logiciel informatique selon la revendication 1 ou la revendication 2, dans lequel les instructions amènent en outre les processeurs (30, 40, 46, 47) à exécuter un processus de sécurité en réponse à une ou plusieurs conditions qui sont remplies.

9. Produit logiciel informatique selon la revendication 8, dans lequel :
les conditions incluent le processus d'authentification qui n'est pas réussi ;
les instructions amènent les processeurs (30, 40, 46, 47) à exécuter le processus de sécurité au lieu du processus d'authentification ;
le processus de sécurité inclut le partage de l'élément numérique (22) avec un contact d'urgence ; et/ou
le processus de sécurité inclut la suppression de l'élément numérique (22).

10. Produit logiciel informatique selon la revendication 8, dans lequel le processus de sécurité inclut la fourniture d'un accès à un élément numérique leurre au lieu de l'élément numérique (22).

11. Produit logiciel informatique selon la revendication 10, dans lequel les instructions amènent en outre les processeurs (30, 40, 46, 47) à créer l'élément numérique leurre sur la base de l'élément numérique (22).

12. Produit logiciel informatique selon la revendication 10, dans lequel les instructions amènent en outre les processeurs (30, 40, 46, 47) à stocker l'élément numérique (22) et l'élément numérique leurre en réponse à la réception de l'élément numérique (22).

13. Produit logiciel informatique selon la revendication 12, dans lequel les instructions amènent les processeurs (30, 40, 46, 47) à exécuter le même processus pour stocker l'élément numérique leurre que pour stocker l'élément numérique (22).

14. Procédé, comprenant :
l'utilisation d'un ou de plusieurs processeurs (30, 40, 46, 47) :
la réception, d'un premier utilisateur :
d'un élément numérique (22) destiné à être partagé avec au moins un second utilisateur,
d'au moins un point de communication pour le second utilisateur, et
de données se rapportant au second utilisateur ;
l'exécution d'un processus d'authentification, en :
générant une ou plusieurs questions d'authentification à partir des données à l'aide d' un grand modèle de langage,
fournissant, au point de communication, un accès aux questions d'authentification, et
recevant des réponses respectives aux questions d'authentification ;
la détermination du résultat du processus d'authentification sur la base de l'exactitude des réponses ; et
à condition que le processus d'authentification réussisse, la fourniture d'un accès à l'élément numérique (22).

15. Système, comprenant :
une interface de communication ; et
un ou plusieurs processeurs (30, 40, 46, 47), configurés pour :
recevoir, d'un premier utilisateur :
un élément numérique (22) destiné à être partagé avec au moins un second utilisateur,
au moins un point de communication pour le second utilisateur, et
des données se rapportant au second utilisateur,
exécuter un processus d'authentification, en :
générant une ou plusieurs questions d'authentification à partir des données à l'aide d'un grand modèle de langage, et
par l'intermédiaire de l'interface de communication :
fournissant, au point de communication, un accès aux questions d'authentification, et
recevant des réponses respectives aux questions d'authentification,
déterminer un résultat du processus d'authentification sur la base de l'exactitude des réponses, et
à condition que le processus d'authentification réussisse, fournir un accès à l'élément numérique (22).
